# EUROPEAN PATENT APPLICATION

(11) **EP 1 553 513 A1**
(43) Date of publication of application: **13.07.2005**
(21) Application number: 03791324.1
(22) Date of filing: 27.08.2003
(51) Int. Cl.: G06F 17/60

(54) **INFORMATION PROCESSING DEVICE AND METHOD, RECORDING MEDIUM, AND PROGRAM**

(30) Priority: 28.08.2002 JP 2002248107
(71) Applicant: Sony Corporation, Tokyo 141-0001 (JP)
(72) Inventor: URANO, Naomi, Shinagawa-ku, Tokyo 141-0001 (JP); KURIHARA, Akira, Shinagawa-ku, Tokyo 141-0001 (JP)
(74) Representative: Robinson, Nigel Alexander Julian
(86) International application number: PCT/JP2003/010823
(87) International publication number: WO 2004/021236

(57) **Abstract**

The present invention relates to an information processing apparatus and method, a recording medium, and a program for allowing items in usage conditions set for digital content to be easily added, deleted, and replaced. A data acquisition section 91 requests a content distribution apparatus to supply digital content, and outputs to a data storage section 95 the digital content and usage-condition information corresponding thereto supplied in response to this request. Furthermore, in response to a request from a usage-condition determination section 93, the data acquisition section 91 makes a request to the content distribution apparatus for a usage-condition plug-in module 94. From among a plurality of usage-condition plug-in modules 94, the usage-condition determination section 93 starts up only usage-condition plug-in modules 94 corresponding to the items in the usage conditions, and informs a playback section 92 of the result of a determination as to whether the items in the usage conditions are satisfied. The playback section 92 plays back the digital content according to the determination result.

## Description

### Technical Field

The present invention relates to information processing apparatuses and methods, recording media, and programs. The present invention relates to an information processing apparatus and method, a recording medium, and a program suitable for setting out usage conditions for digital content, such as music, documents, static images, moving images, and computer programs, to be supplied to clients.

### Background Art

For example, there is available a service providing clients with digital content, such as music, documents, static images, moving images, and computer programs, via the Internet. In many cases, such services restrict the allowed playback period and the number of allowed playbacks, as usage conditions of the digital content, in order to protect the copyright.

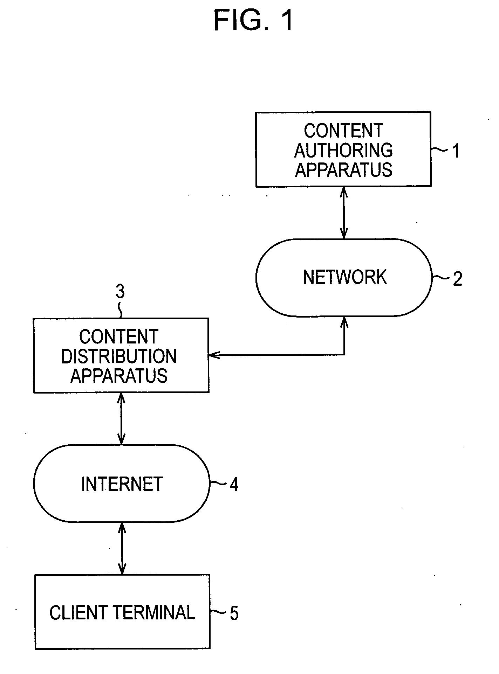

Fig. 1 shows one example of the structure of a known digital content supply system providing such a service.

In the known digital content supply system, a content authoring apparatus 1 generates digital content or acquires digital content by a predetermined method for editing. Furthermore, the content authoring apparatus 1 sets thresholds for items such as the playback period and the number of playbacks as usage conditions. Moreover, the content authoring apparatus 1 transmits digital content having the usage conditions to a content distribution apparatus 3 via a network 2. The network 2 may be an intranet, such as a LAN (Local Area Network), or the Internet.

The content distribution apparatus 3 stores the digital content having the set usage condition sent from the content authoring apparatus 1. Furthermore, in response to a request by a client terminal 5 having access to the content distribution apparatus 3 via the Internet 4, the content distribution apparatus 3 supplies the stored digital content.

The client terminal 5 stores the digital content acquired from the content distribution apparatus 3 via the Internet 4. Thereafter, if a user (client) enters a playback command, it is determined whether the usage conditions set in the digital content are currently satisfied. The playback of the digital content is started only if the determination result indicates that the usage conditions are satisfied.

In the known digital content supply system, it is easy to change the thresholds for existing items, such as the allowed playback period and the number of allowed playbacks, as usage conditions.

However, the known digital content supply system is disadvantageous in that the deletion of an existing item in the usage conditions, the addition of a new item, or the replacement of an item requires a huge amount of processing, such as to modify computer programs in both the content authoring apparatus 1 and the client terminal 5.

### Disclosure of Invention

The present invention is conceived in light of these circumstances, and it is an object of the present invention to modularize items in usage conditions for digital content to enable the items in the usage conditions to be added, deleted, and replaced easily.

A first information processing apparatus according to the present invention includes setting means for setting usage conditions for digital content and generating the corresponding usage-condition information; storage means for storing the usage-condition information by associating the usage-condition information with the digital content; and supply means for supplying a client terminal with the usage-condition information stored by the storage means via a network in response to a request from the client terminal, wherein the setting means includes a usage-condition setting module corresponding to each of at least one item included in the usage conditions.

An item in the usage conditions may include at least one of an allowed playback period, a number of permitted uses, a body temperature, a pulse rate, and a blood pressure of a user, a temperature, a humidity, a longitude, a latitude, and an altitude of an operating location, an acceleration and a pressure applied to the client terminal, and an authentication of the user.

The usage-condition setting module may be plug-in format software.

The first information processing apparatus according to the present invention may further include providing means for providing the client terminal with a usage-condition determination module corresponding to the usage-condition information via the network.

The network may be the Internet.

A first information processing method according to the present invention includes a setting step of setting usage conditions for digital content and generating the corresponding usage-condition information; a storage step of storing the usage-condition information by associating the usage-condition information with the digital content; and a supply step of supplying a client terminal with the usage-condition information stored by the processing in the storage step via a network in response to a request from the client terminal, wherein the setting step is executed by a usage-condition setting module corresponding to each of at least one item included in the usage conditions.

A program on a first recording medium according to the present invention includes a setting step of setting usage conditions for digital content and generating the corresponding usage-condition information; a storage control step of storing the usage-condition information by associating the usage-condition information with the digital content; and a supply step of supplying a client terminal with the usage-condition information stored by the processing in the storage control step via a network in response to a request from the client terminal, wherein the setting step is executed by a usage-condition setting module corresponding to each of at least one item included in the usage conditions.

A first program according to the present invention causes the following steps to be executed: a setting step of setting usage conditions for digital content and generating the corresponding usage-condition information; a storage control step of storing the usage-condition information by associating the usage-condition information with the digital content; and a supply step of supplying a client terminal with the usage-condition information stored by the processing in the storage control step via a network in response to a request from the client terminal, wherein the setting step is executed by a usage-condition setting module corresponding to each of at least one item included in the usage conditions.

A second information processing apparatus according to the present invention includes storage means for storing digital content; acquisition means for acquiring the usage-condition information corresponding to the digital content stored in the storage means from a server via a network; determination means for determining whether the digital content can be played back based on the usage-condition information; and playback control means for controlling the playback of the digital content according to a determination result by the determination means, wherein the determination means includes a usage-condition determination module corresponding to each of at least one item included in the usage conditions.

An item in the usage conditions may include at least one of an allowed playback period, a number of permitted uses, a body temperature, a pulse rate, and a blood pressure of a user, a temperature, a humidity, a longitude, a latitude, and an altitude of an operating location, an acceleration and a pressure applied to the information processing apparatus, and an authentication of the user.

The usage-condition determination module may be plug-in format software.

The second information processing apparatus according to the present invention may further include request means for making a request to the server for a usage-condition determination module corresponding to the usage-condition information via the network.

A second information processing method according to the present invention includes a storage step of storing digital content; an acquisition step of acquiring the usage-condition information corresponding to the digital content stored by the processing in the storage step from a server via a network; a determination step of determining whether the digital content can be played back based on the usage-condition information; and a playback control step of controlling the playback of the digital content according to a determination result by the processing in the determination step, wherein the processing in the determination step is executed by a usage-condition determination module corresponding to each of at least one item included in the usage conditions.

A program on a second recording medium according to the present invention includes a storage control step of storing digital content; an acquisition step of acquiring the usage-condition information corresponding to the digital content stored by the processing in the storage control step from a server via a network; a determination step of determining whether the digital content can be played back based on the usage-condition information; and a playback control step of controlling the playback of the digital content according to a determination result by the processing in the determination step, wherein the processing in the determination step is executed by a usage-condition determination module corresponding to each of at least one item included in the usage conditions.

A second program according to the present invention causes the following steps to be executed: a storage control step of storing the digital content; an acquisition step of acquiring the usage-condition information corresponding to the digital content stored by the processing in the storage control step from a server via a network; a determination step of determining whether the digital content can be played back based on the usage-condition information; and a playback control step of controlling the playback of the digital content according to a determination result by the processing in the determination step, wherein the processing in the determination step is executed by a usage-condition determination module corresponding to each of at least one item included in the usage conditions.

In the first information processing apparatus, method, and program according to the present invention, usage conditions are set for the digital content and the corresponding usage-condition information is generated, and they are supplied to the client terminal via the network in response to a request from the client terminal. This setting is carried out by a usage-condition setting module corresponding to each of at least one item in the usage conditions.

In the second information processing apparatus, method, and program according to the present invention, the usage-condition information corresponding to the digital content is acquired from the server via the network, and based on this usage-condition information, it is determined whether the digital content can be played back. This determination is carried out by a usage-condition determination module corresponding to each of at least one item in the usage conditions.

### Brief Description of the Drawings

Fig. 1 is a block diagram showing one example of the structure of a known digital content supply system.
Fig. 2 is a block diagram showing an example structure of a digital content supply system according to an embodiment of the present invention.
Fig. 3 is a block diagram showing an example structure of the content authoring apparatus 11 in Fig. 2.
Fig. 4 is a diagram showing an example structure of the functional blocks of the content authoring apparatus 11 in Fig. 2.
Fig. 5 is a diagram showing an example structure of the functional blocks of the client terminal 31 in Fig. 2.
Fig. 6 is a flowchart for describing the operation of the content authoring apparatus 11.
Fig. 7 is a flowchart for describing the processing of step S2 in Fig. 6.
Fig. 8 is a flowchart for describing the operation of the client terminal 31.
Fig. 9 is a flowchart for describing the processing of step S22 in Fig. 8.

### Best Mode for Carrying Out the Invention

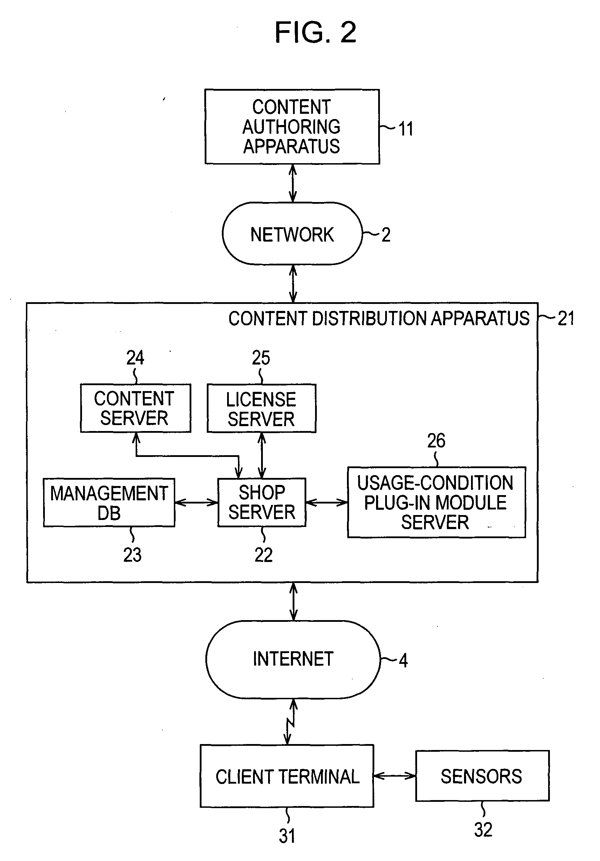

Fig. 2 shows an example structure of a digital content supply system to which the present invention is applied. This digital content supply system includes a content authoring apparatus 11 for generating digital content or acquiring digital content by a predetermined method for editing, generating usage-condition information indicating usage conditions applied to the digital content, and registering it in a content distribution system 21 via a network 2. This digital content supply system further includes the content distribution apparatus 21 for storing digital content and usage-condition information corresponding thereto from the content authoring apparatus 11 and supplying the stored digital content and usage-condition information corresponding thereto in response to a request from a client terminal 31 having accessed to the content distribution apparatus 21 via the Internet 4; and the client terminal 31 for storing and playing back digital content supplied from the content distribution apparatus 21.

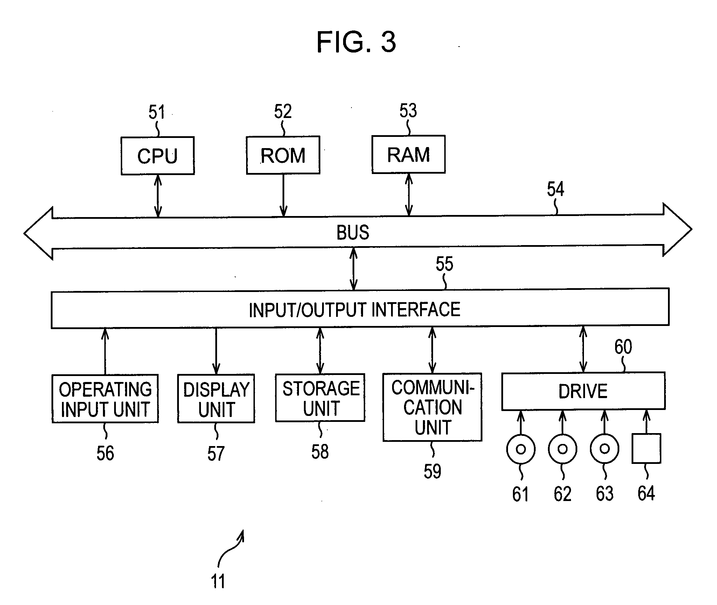

Fig. 3 shows an example structure of the content authoring apparatus 11. The content authoring apparatus 11 incorporates a CPU (Central Processing Unit) 51. An input/output interface 55 is connected to the CPU 51 via a bus 54. A ROM (Read Only Memory) 52 and a RAM (Random Access Memory) 53 are connected to the bus 54.

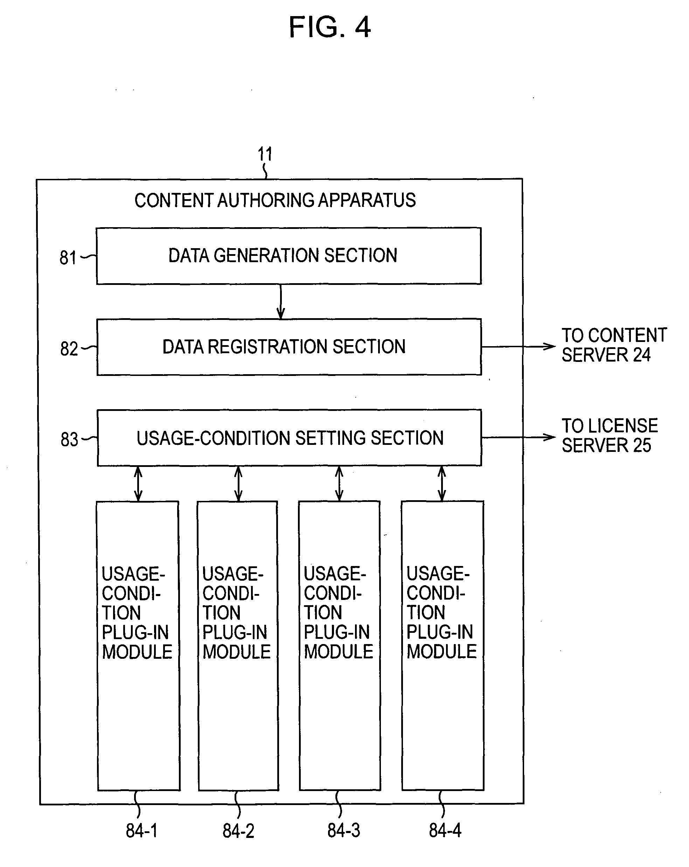

The input/output interface 55 connects to an operating input unit 56 including input devices, such as a keyboard and a mouse, used by the operator to enter various commands; a display unit 57 including, for example, a CRT (Cathode Ray Tube) or an LCD (Liquid Crystal Display) for displaying, for example, an operation screen; a storage unit 58 including, for example, a hard disk drive for storing programs, usage-condition plug-in modules 84 (Fig. 4), and various data; a communication unit 59 for communicating the digital content and usage-condition information corresponding thereto to the content distribution apparatus 21 via the network 2; and a drive 60 for reading and writing data from/to recording media, such as magnetic disk 61 to semiconductor memory 64.

The CPU 51 carries out various types of processing according to programs stored in the ROM 52 or programs that have been read from the magnetic disk 61 through the semiconductor memory 64, stored in the storage unit 58, and then loaded from the storage unit 58 into the RAM 53. If necessary, the RAM 53 also stores data required by the CPU 51 to carry out various types of processing.

Fig. 4 shows an example structure of the functional blocks realized with a predetermined program executed by the CPU 51 in the content authoring apparatus 11. To construct the content authoring apparatus 11, the functional blocks in Fig. 4 may be realized with hardware.

A data generation section 81 generates digital content or acquires digital content by a predetermined method to edit it (e.g., to convert it into a format suitable for distribution via the Internet 4). Furthermore, the data generation section 81 generates or acquires, by a predetermined method, metadata representing, for example, the copyright holder and the cast of the digital content and fringe files including, for example, image data of album photos corresponding to the digital content and sample data.

A data registration section 82 encrypts, as required, digital content generated by the data generation section 81 and the metadata and fringe files corresponding thereto, and packages the encrypted data in one data unit, which is then registered in a content server 24 of the content distribution apparatus 21 via the network 2. Hereinafter, digital content and metadata and fringe files corresponding thereto may be collectively referred to simply as digital content.

From among a plurality of prepared usage-condition plug-in modules 84 (usage-condition plug-in modules 84-1 to 84-4 in the example of Fig. 4), a usage-condition setting section 83 starts up the usage-condition plug-in modules 84 corresponding to the items (e.g., allowed playback period) of the usage conditions specified by the operator, inputs thresholds (e.g., 60 days from the first day of use), packages the usage-condition information returned from the usage-condition plug-in modules 84 in response to the thresholds, and registers it in a license server 25 of the content distribution apparatus 21 via the network 2.

The usage-condition plug-in modules 84 corresponding to items in the usage conditions include plug-in format software, and can be added, deleted, and replaced by the operator as required. In addition to the allowed playback period and the number of permitted uses, items in the usage conditions include, for example, user's vital signs (e.g., body temperature, pulse rate, blood pressure), operating environment (e.g., temperature, humidity, pressure, acceleration), operating location (e.g., longitude, latitude, altitude), and user (e.g., person authentication).

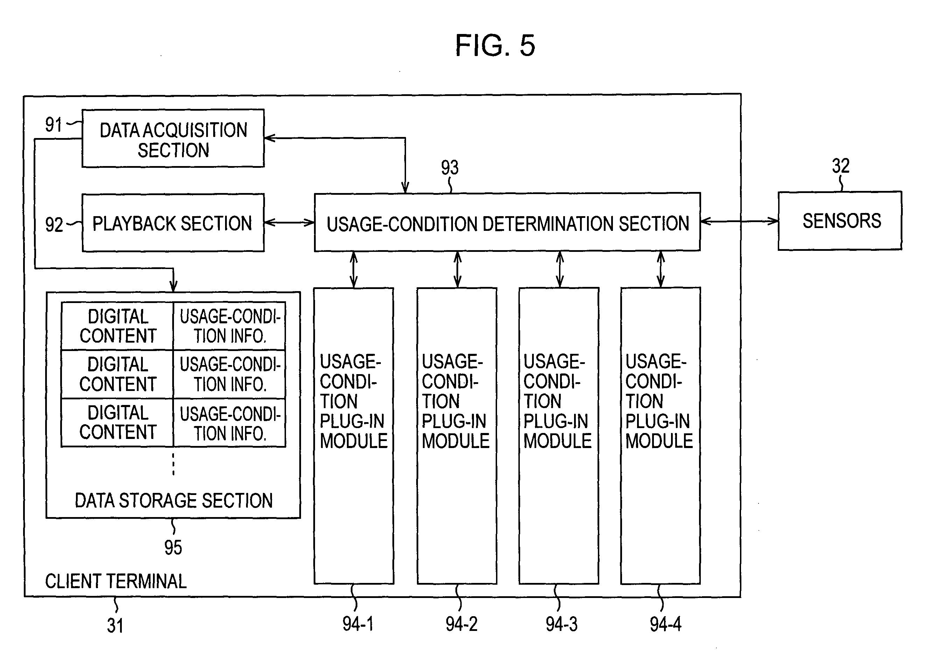

Referring back to Fig. 2, a shop server 22 constituting the content distribution apparatus 21 accepts access by the client terminal 31 via the Internet 4, refers to a management database (DB) 23 to read the digital content specified by the client terminal 31 and the usage-condition information corresponding thereto from the content server 24 or the license server 25, and distributes them to the client terminal 31. Furthermore, in response to a request from the client terminal 31, the shop server 22 reads usage-condition plug-in modules 94 (Fig. 5) from a usage-condition plug-in module server 26 and supplies them to the client terminal 31.

The management database 23 stores the storage address of each item of digital content in the content server 24 and the storage address of the usage-condition information corresponding thereto in the license server 25. The records in the management database 23 are updated each time new digital content from the content authoring apparatus 11 and usage-condition information corresponding thereto are added.

The content server 24 stores digital content input from the content authoring apparatus 11 via the network 2. The license server 25 stores usage-condition information input together with digital content from the content authoring apparatus 11 via the network 2.

The usage-condition plug-in module server 26 stores the usage-condition plug-in modules 94 used in the client terminal 31.

The client terminal 31 stores digital content and usage-condition information corresponding thereto acquired from the content distribution apparatus 21 via the Internet 4. In response to a playback command from the user (client), the client terminal 31 determines whether the usage conditions are satisfied, and starts the playback of the digital content only if it determines that the usage conditions are satisfied.

The example structure of the client terminal 31 is similar to the example structure of the content authoring apparatus 11 shown in Fig. 3, and thus will not be described.

Various sensors 32 for acquiring various types of detection values functioning as criteria for determining whether the usage conditions are satisfied are connected to the client terminal 31. The sensors 32 include, for example, a body temperature sensor for detecting the body temperature of the user, a blood pressure sensor for detecting the blood pressure of the user, a pulse rate sensor for detecting pulse rate of the user, a temperature/humidity sensor for detecting the temperature and humidity, an acceleration sensor for detecting the acceleration applied to the client terminal 31, a GPS (Global Positioning System) sensor for detecting the location (longitude, latitude, and altitude) of the client terminal 31, a pressure sensor for detecting the pressure applied to the client terminal 31, and a person authentication apparatus for authenticating the ID, fingerprints, etc. of the user.

Fig. 5 shows an example structure of the functional blocks of the client terminal 31. A data acquisition section 91 requests the content distribution apparatus 21 to supply digital content via the Internet 4, and outputs to a data storage section 95 the digital content and usage-condition information corresponding thereto supplied by the content distribution apparatus 21 in response to this request.

Furthermore, in response to a request from a usage-condition determination section 93, the data acquisition section 91 makes a request to the content distribution apparatus 21 for a usage-condition plug-in module 94-X (X is 5 or a larger number in the example of Fig. 5) not held by the usage-condition determination section 93. The data acquisition section 91 outputs to the usage-condition determination section 93 the usage-condition plug-in module 94-X supplied by the content distribution apparatus 21 in response to this request.

A playback section 92 follows a user's command for selecting and playing back digital content stored in the data storage section 95 to read out the corresponding usage-condition information and output it to the usage-condition determination section 93. The playback section 92 then starts to play back the digital content or abandons the playback of the digital content and informs the user of the abandoned playback depending on the determination result returned from the usage-condition determination section 93.

The usage-condition determination section 93 has a plurality of usage-condition plug-in modules 94 (usage-condition plug-in modules 94-1 to 94-4 in the example of Fig. 5). It starts up only usage-condition plug-in modules 94 corresponding to the items in the usage conditions from the playback section 92, supplies the thresholds for the items included in the usage-condition information and the corresponding detection values from the sensors 32, and causes it to determine whether the items in the usage conditions are satisfied. The usage-condition determination section 93 then reports the determination result to the playback section 92.

Furthermore, if the usage-condition determination section 93 does not hold a usage-condition plug-in module 94-X corresponding to the usage-condition information from the playback section 92, it requests the data acquisition section 91 to acquire the missing usage-condition plug-in module 94-X from the content distribution apparatus 21.

From among the usage-condition plug-in modules 94-1 to 94-4 held by the usage-condition determination section 93, it is presumed that, for example, the usage-condition plug-in module 94-1 is a module for determining the allowed playback period as an item in the usage conditions, the usage-condition plug-in module 94-2 is a module for determining the number of allowed playbacks as an item in the usage conditions, the usage-condition plug-in module 94-3 is a module for determining the location of the client terminal 31 as an item in the usage conditions, and the usage-condition plug-in module 94-4 is a module for determining the acceleration applied to the client terminal 31 as an item in the usage conditions.

Here, if the items in the usage conditions indicated by the usage-condition information from the playback section 92 are the allowed playback period and the location of the client terminal 31, the usage-condition plug-in modules 94-1 and 94-3 are started up and it is determined whether the usage conditions are satisfied.

Furthermore, for example, if the item in the usage conditions indicated by the usage-condition information from the playback section 92 is temperature, the usage-condition determination section 93 requests the data acquisition section 91 to acquire the usage-condition plug-in module 94-X for determining temperature, as an item in the usage conditions, from the content distribution apparatus 21, because the usage-condition determination section 93 does not hold the usage-condition plug-in module 94-X.

The data storage section 95 stores digital content and the usage-condition information corresponding thereto input from the data acquisition section 91, and supplies the stored digital content and the usage-condition information corresponding thereto in response to a request from the playback section 92.

The operation up to the point where the content authoring apparatus 11 registers digital content in the content distribution apparatus 11 will now be described with reference to the flowchart in Fig. 4.

In step S1, according to an operator's operation, the data generation section 81 specifies digital content, metadata, and fringe files to be registered in the content distribution apparatus 21 from among the digital content, metadata, and fringe files pre-generated or acquired by a predetermined method, and outputs the specified digital content, metadata, and fringe files to the data registration section 82.

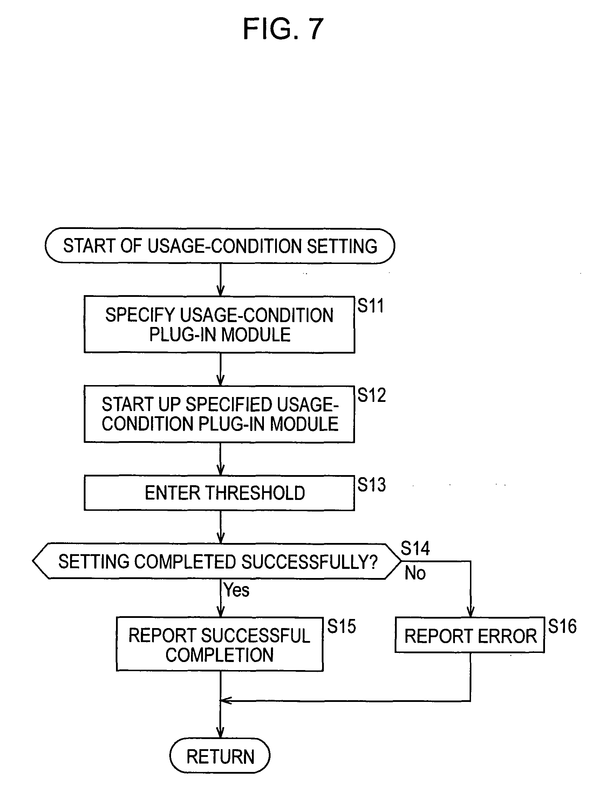

In step S2, according to an operator's operation, the usage-condition setting section 83 sets out usage conditions for the digital content specified in step S1. Details of the processing in step S2 will now be described with reference to the flowchart in Fig. 7.

In step S11, from among a plurality of prepared usage-condition plug-in modules 84, the usage-condition setting section 83 specifies usage-condition plug-in modules corresponding to the items in the usage conditions set by the operator. If a usage-condition plug-in module 84-X corresponding to an item in the usage conditions set by the operator does not exist in the usage-condition setting section 83, a corresponding usage-condition plug-in module 84-X can be added to the usage-condition setting section 83 at this stage.

In step S12, the usage-condition setting section 83 starts up the usage-condition plug-in modules 84 specified in step S11. In step S13, the usage-condition setting section 83 sets a threshold set by the operator for each of the started usage-condition plug-in modules 84. In response to this, each of the usage-condition plug-in modules 84 that have been started up generates usage-condition information.

In step S14, each of the started usage-condition plug-in modules 84 determines whether the setting of the usage conditions has been completed normally (whether the generation of usage-condition information has been completed normally). In step S15, the usage-condition plug-in modules 84 having determined that the setting has been completed normally report to the usage-condition setting section 83 that the setting of the usage conditions has been completed normally, and output the generated usage-condition information.

In contrast, in step S16, the usage-condition plug-in modules 84 having determined in step S14 that the setting has not been completed normally report to the usage-condition setting section 83 an error indicating that the setting of the usage conditions has not been completed normally.

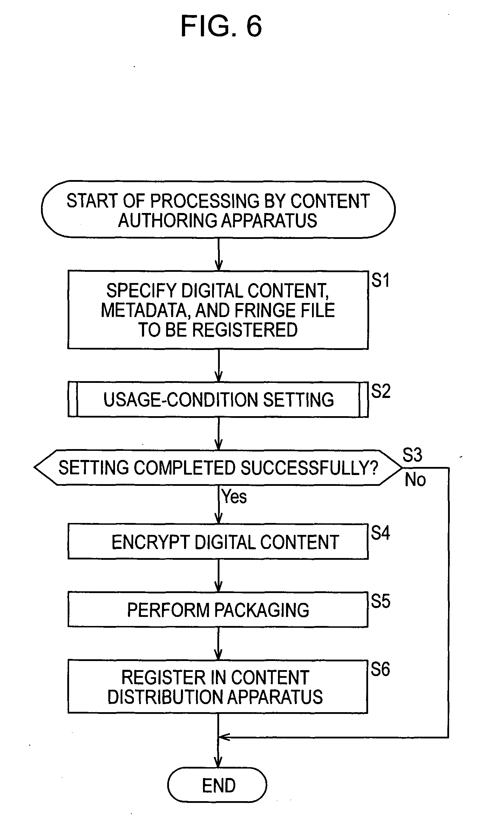

The processing returns to step S3 in Fig. 6. In step S3, the usage-condition setting section 83 determines whether the setting of all the items in the usage conditions specified by the operator has been completed normally based on the notification from each of the usage-condition plug-in modules 84 started up in step S12. If it is determined that the setting of all the items in the usage conditions has been completed normally, the processing proceeds to step S4.

In step S4, the data registration section 82 encrypts the digital content, metadata, and the fringe files input in step S1, as required. In step S5, the data registration section 82 packages the encrypted digital content, metadata, and fringe files in one data unit.

In step S6, the data registration section 82 registers the packaged digital content in the content server 24 of the content distribution apparatus 21. On the other hand, the usage-condition setting section 83 registers in the license server 25 the usage-condition information generated in step S2 by associating the usage-condition information with the digital content registered in the content server 24.

If it is determined in step S3 that at least one of the items in the usage conditions specified by the operator has not been completed normally, the processing from steps S4 through S6 is skipped, and this operation ends without registering the digital content in the content distribution apparatus 11. The operation up to the point where the content authoring apparatus 11 registers digital content in the content distribution apparatus 11 has thus been described.

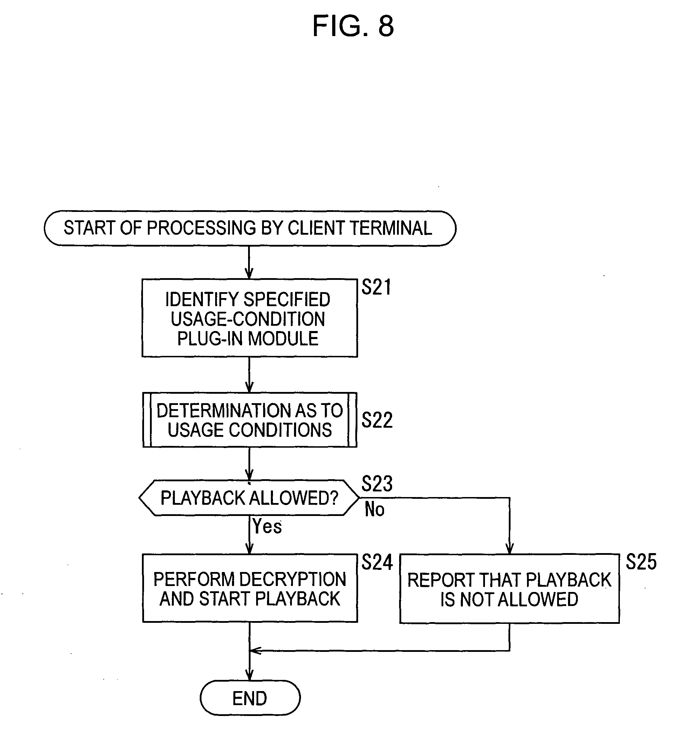

The operation by the client terminal 31 playing back digital content will now be described with reference to the flowchart in Fig. 8. It is presumed that before this operation is started, digital content acquired from the content distribution apparatus 21 and usage-condition information corresponding thereto are stored in the data storage section 95 of the client terminal 31.

This operation is started up according to a user's command for selecting and playing back digital content stored in the data storage section 95.

In step S21, the playback section 92 reads out the usage-condition information corresponding to the selection by the user and outputs it to the usage-condition determination section 93. The usage-condition determination section 93 identifies the usage-condition plug-in modules 94 to be started up based on the usage-condition information.

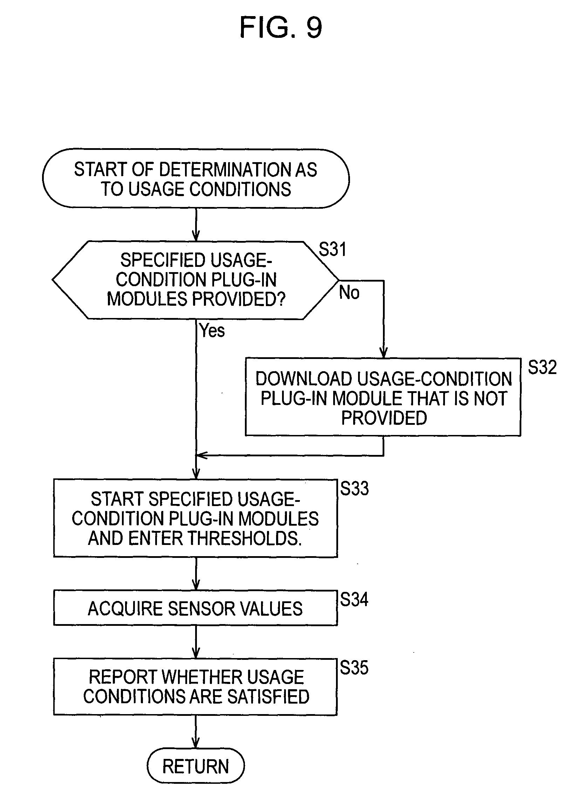

In step S22, the usage-condition determination section 93 determines whether the usage conditions are currently satisfied. Details of the processing in step S22 will now be described with reference to the flowchart in Fig. 9.

In step S31, the usage-condition determination section 93 determines whether all usage-condition plug-in modules 94 identified in step S21 are available. If it is determined that at least one of the usage-condition plug-in modules 94 is not available, or missing, then the processing proceeds to step S32.

In step S32, the usage-condition determination section 93 requests the data acquisition section 91 to acquire a missing usage-condition plug-in module 94-X from the content distribution apparatus 21. In response to this request, the data acquisition section 91 downloads the missing usage-condition plug-in module 94-X from the content distribution apparatus 21 and outputs it to the usage-condition determination section 93.

If it is determined in step S31 that all the usage-condition plug-in modules 94 identified in step S21 are available, that is, if there are no missing usage-condition plug-in modules 94, then the processing in step S32 is skipped.

In step S33, the usage-condition determination section 93 starts up each of the usage-condition plug-in modules 94 identified in step S21, and inputs the threshold included in the usage-condition information to each of the usage-condition plug-in modules 94. In step S34, the usage-condition determination section 93 acquires from the sensors 32 the detection values corresponding to the items in the usage conditions, and inputs them to the respective usage-condition plug-in modules 94.

In step S35, each of the started usage-condition plug-in modules 94 compares the threshold input thereto with the detection value to determine whether the usage conditions are satisfied, and then reports the determination result to the usage-condition determination section 93.

For the processing up to this point, the processing in steps S21, S31, and S32 may be carried out not when the playback of digital content is instructed but when digital content is acquired from the content distribution apparatus 21.

The processing then returns to step S23 in Fig. 8. In step S23, the usage-condition determination section 93 determines whether the digital content specified by the user can be played back based on the notification from the started usage-condition plug-in modules 94. More specifically, a determination is made that playback is allowed only if all determination results from the started usage-condition plug-in modules 94 indicate that "the usage conditions are satisfied". A determination is made that playback is not allowed if any of the determination results from the started usage-condition plug-in modules 94 indicates that "the usage conditions are not satisfied".

If it is determined in step S23 that the digital content selected by the user can be played back, the processing proceeds to step S24. In step S24, the playback section 92 decrypts the digital content, as required, to start playback.

In contrast, if it is determined in step S23 that the digital content selected by the user cannot be played back, the processing proceeds to step S25. In step S25, the playback section 92 informs the user that playback is not allowed because the usage conditions are not satisfied. The operation by the client terminal 31 playing back digital content has thus been described.

As described so far, according to the digital content supply system of the present invention, items in the usage conditions can be freely added, deleted, or replaced in the content authoring apparatus 11 that distributes digital content. Furthermore, in the client terminal 31 that uses digital content, the usage-condition plug-in modules 94 can be added according to the items in the usage conditions set for the digital content.

In the present description, the steps of programs recorded on the recording medium may or may not be followed time-sequentially in order of the described steps; the steps may be followed in parallel or independently from one another.

In addition, in the present description, the system represents an entire apparatus including a plurality of devices.

### Industrial Applicability

As described above, according to the present invention, items in the usage conditions for digital content can easily be added, deleted, or replaced.

## Claims

1. An information processing apparatus for supplying a client terminal with usage-condition information regarding restrictions on the use of digital content via a network, comprising:
setting means for setting usage conditions for the digital content and generating the corresponding usage-condition information;
storage means for storing the usage-condition information by associating the usage-condition information with the digital content; and
supply means for supplying the client terminal with the usage-condition information stored by the storage means via the network in response to a request from the client terminal,
wherein the setting means includes a usage-condition setting module corresponding to each of at least one item included in the usage conditions.

2. The information processing apparatus according to claim 1, wherein an item in the usage conditions includes at least one of an allowed playback period, a number of permitted uses, a body temperature, a pulse rate, and a blood pressure of a user, a temperature, a humidity, a longitude, a latitude, and an altitude of an operating location, an acceleration and a pressure applied to the client terminal, and an authentication of the user.

3. The information processing apparatus according to claim 1, wherein the usage-condition setting module is plug-in format software.

4. The information processing apparatus according to claim 1, further comprising providing means for providing the client terminal with a usage-condition determination module corresponding to the usage-condition information via the network.

5. The information processing apparatus according to claim 1, wherein the network is the Internet.

6. An information processing method of an information processing apparatus for supplying a client terminal with usage-condition information regarding restrictions on the use of digital content via a network, comprising:
a setting step of setting usage conditions for the digital content and generating the corresponding usage-condition information;
a storage step of storing the usage-condition information by associating the usage-condition information with the digital content; and
a supply step of supplying the client terminal with the usage-condition information stored by the processing in the storage step via the network in response to a request from the client terminal,
wherein the setting step is executed by a usage-condition setting module corresponding to each of at least one item included in the usage conditions.

7. A recording medium storing a computer-readable program for supplying a client terminal with usage-condition information regarding restrictions on the use of digital content via a network, the program comprising:
a setting step of setting usage conditions for the digital content and generating the corresponding usage-condition information;
a storage control step of storing the usage-condition information by associating the usage-condition information with the digital content; and
a supply step of supplying the client terminal with the usage-condition information stored by the processing in the storage control step via the network in response to a request from the client terminal,
wherein the setting step is executed by a usage-condition setting module corresponding to each of at least one item included in the usage conditions.

8. A program for causing a computer for supplying a client terminal with usage-condition information regarding restrictions on the use of digital content via a network to execute:
a setting step of setting usage conditions for the digital content and generating the corresponding usage-condition information;
a storage control step of storing the usage-condition information by associating the usage-condition information with the digital content; and
a supply step of supplying the client terminal with the usage-condition information stored by the processing in the storage control step via the network in response to a request from the client terminal,
wherein the setting step is executed by a usage-condition setting module corresponding to each of at least one item included in the usage conditions.

9. An information processing apparatus for playing back digital content according to usage-condition information, comprising:
storage means for storing the digital content;
acquisition means for acquiring the usage-condition information corresponding to the digital content stored in the storage means from a server via a network;
determination means for determining whether the digital content can be played back based on the usage-condition information; and
playback control means for controlling the playback of the digital content according to a determination result by the determination means,
wherein the determination means includes a usage-condition determination module corresponding to each of at least one item included in the usage conditions.

10. The information processing apparatus according to claim 9, wherein an item in the usage conditions includes at least one of an allowed playback period, a number of permitted uses, a body temperature, a pulse rate, and a blood pressure of a user, a temperature, a humidity, a longitude, a latitude, and an altitude of an operating location, an acceleration and a pressure applied to the information processing apparatus, and an authentication of the user.

11. The information processing apparatus according to claim 9, wherein the usage-condition determination module is plug-in format software.

12. The information processing apparatus according to claim 9, further comprising request means for making a request to the server for a usage-condition determination module corresponding to the usage-condition information via the network.

13. An information processing method of an information processing apparatus for playing back digital content according to usage-condition information, comprising:
a storage step of storing the digital content;
an acquisition step of acquiring the usage-condition information corresponding to the digital content stored by the processing in the storage step from a server via a network;
a determination step of determining whether the digital content can be played back based on the usage-condition information; and
a playback control step of controlling the playback of the digital content according to a determination result by the processing in the determination step,
wherein the processing in the determination step is executed by a usage-condition determination module corresponding to each of at least one item included in the usage conditions.

14. A recording medium storing a computer-readable program for playing back digital content according to usage-condition information, the program comprising:
a storage control step of storing the digital content;
an acquisition step of acquiring the usage-condition information corresponding to the digital content stored by the processing in the storage control step from a server via a network;
a determination step of determining whether the digital content can be played back based on the usage-condition information; and
a playback control step of controlling the playback of the digital content according to a determination result by the processing in the determination step,
wherein the processing in the determination step is executed by a usage-condition determination module corresponding to each of at least one item included in the usage conditions.

15. A program for causing a computer for playing back digital content according to usage-condition information to execute:
a storage control step of storing the digital content;
an acquisition step of acquiring the usage-condition information corresponding to the digital content stored by the processing in the storage control step from a server via a network;
a determination step of determining whether the digital content can be played back based on the usage-condition information; and
a playback control step of controlling the playback of the digital content according to a determination result by the processing in the determination step,
wherein the processing in the determination step is executed by a usage-condition determination module corresponding to each of at least one item included in the usage conditions.
